# FASCICULE DE BREVET EUROPEEN

(11) **EP 2 914 449 B1**
(45) Date de publication et mention de la délivrance du brevet: **21.02.2018**
(21) Numéro de dépôt: 13779878.1
(22) Date de dépôt: 23.10.2013
(51) Int. Cl.: B60C 19/00, B60C 13/00, B60C 13/02, G01M 17/02

(54) **FLANC DE PNEUMATIQUE POUR VEHICULE LOURD DE TYPE GENIE CIVIL**
REIFENSEITENWAND FÜR SCHWERLASTFAHRZEUG
TIRE SIDEWALL FOR CIVIL ENGINEERING HEAVY DUTY VEHICLE

(30) Priorité: 31.10.2012 FR 1260412
(43) Date de publication de la demande: 09.09.2015
(73) Titulaire: Compagnie Générale des Etablissements Michelin, 63000 Clermont-Ferrand (FR)
(72) Inventeur: FERLIN, Olivier, F-63040 Clermont Ferrand Cedex 9 (FR)
(74) Mandataire: Millanvois, Patrick Jacques Jean
(86) Numéro de dépôt international: PCT/EP2013/072136
(87) Numéro de publication internationale: WO 2014/067824

(56) Documents cités:
- DE-A1-102009 044 718
- US-A1- 2003 140 999
- US-B1- 6 221 453

## Description

La présente invention concerne un pneumatique pour un véhicule lourd de type génie civil destiné à évoluer dans un environnement obscur, tel qu'un engin d'exploitation minière souterraine.

Les engins utilisés pour l'exploitation minière souterraine soit en front de taille, soit pour le transport de minerai, évoluent le plus souvent dans un environnement obscur. Ils sont, dans tous les cas, contraints dans leurs déplacements par l'exiguïté des galeries, par la sévérité des changements de direction, par exemple dans le cas d'un réseau de galeries perpendiculaires, et par la quasi totale obscurité qui règne dans les mines souterraines. Dans cet environnement visuel dégradé, le risque de collision entre un engin et tout obstacle présent sur son parcours, tel qu'une paroi de galerie, n'est pas négligeable.

La principale source lumineuse se limitant aux faisceaux émis par les lampes frontales des mineurs, la localisation de ces engins est particulièrement difficile. La détection visuelle en environnement obscur de ces engins est donc une exigence importante pour un exploitant de mine souterraine.

Concernant la détection visuelle en environnement obscur d'un objet, il est connu d'utiliser un dispositif rétro-réfléchissant qui est un système passif, destiné à signaler dans la nuit ou l'obscurité un objet et basé sur l'application du système optique appelé catadioptre.

On appelle rétro-réflexion une réflexion dans laquelle les radiations lumineuses sont renvoyées dans une direction proche de celle dont elles proviennent, cette propriété étant maintenue malgré de grandes variations de la direction des radiations incidentes.

On appelle dispositif rétro-réfléchissant un dispositif qui, lorsqu'il est irradié directionnellement, rétro-réfléchit une partie relativement importante de la radiation incidente.

Il est connu d'incorporer des matériaux de revêtement rétro-réfléchissants aux flancs d'un pneumatique, en particulier pour un pneumatique pour véhicule à deux roues. Le règlement n°88, additif 87 à l'Accord des Nations Unies du 20 mars 1958, concernant l'adoption de conditions uniformes d'homologation et la reconnaissance réciproque de l'homologation des équipements et pièces de véhicules à moteur, définit les prescriptions uniformes relatives à l'homologation des pneus rétro-réfléchissants pour véhicule à deux roues. Un pneumatique rétro-réfléchissant, au sens du règlement n°88 précédemment cité, est un pneumatique prêt à être utilisé comprenant un cercle rétro-réfléchissant incorporé à chacun des flancs du pneumatique.

Par les matériaux et les formes utilisés pour un dispositif rétro-réfléchissant, les fabricants recherchent le meilleur indice de réflexion lumineuse, en limitant les pertes d'intensité par diffusion ou absorption dans le matériau. Les matières de base sont variées et adaptées aux divers usages. À titre d'exemples et de façon non exhaustive, on trouve dans le commerce des bandes adhésives, des tissus techniques, des peintures, des produits d'enduction à base de microbilles de verre jouant le rôle de pigment réfléchissant.

Il est donc intéressant d'appliquer un matériau de revêtement rétro-réfléchissant sur les flancs d'un pneumatique pour un véhicule lourd de type génie civil destiné à évoluer dans un environnement obscur, pour permettre la détection visuelle en environnement obscur du pneumatique et celle de l'engin sur lequel il est monté.

Le document US20030140999 A1 décrit en particulier un pneumatique dont la surface extérieure est au moins en partie colorée, préférentiellement par la présence d'un agent colorant ou de pigments réfléchissants, luminescents ou photochromiques dans la composition chimique du pneumatique.

Un pneumatique comprend une bande de roulement destinée à entrer en contact avec un sol par l'intermédiaire d'une surface de roulement. La surface de roulement s'étend axialement, c'est-à-dire parallèlement à l'axe de rotation du pneumatique, entre deux extrémités axiales. Chaque extrémité axiale de la surface de roulement est prolongée radialement vers l'intérieur, c'est-à-dire selon une direction perpendiculaire à l'axe de rotation du pneumatique, par deux faces d'extrémité de bande de roulement. Chaque face d'extrémité de bande de roulement est prolongée radialement vers l'intérieur par une face externe de flanc. L'ensemble constitué par une face d'extrémité de bande de roulement et la face externe de flanc la prolongeant radialement vers l'intérieur constitue une face latérale de pneumatique. On entend par surface externe du pneumatique l'ensemble constitué par la surface de roulement et les deux faces latérales de pneumatiques, symétriques par rapport au plan équatorial du pneumatique passant par le milieu de la surface de roulement et perpendiculairement à l'axe de rotation du pneumatique.

Dans un environnement de mine souterraine, la surface externe du pneumatique est généralement soumise à des agressions mécaniques, d'une part du fait de la présence au sol de nombreux blocs de pierre plus ou moins anguleux, d'autre part du fait de l'agressivité des parois de galerie taillées dans la roche.

Ces agressions mécaniques peuvent entraîner des arrachements de matériaux, en particulier sur les faces latérales de pneumatique, voire une crevaison du pneumatique. En cas d'arrachements importants, le pneumatique doit être remplacé prématurément par rapport à sa durée de vie usuelle, ce qui entraîne un surcoût d'exploitation. En cas de crevaison, le changement de pneumatique peut s'avérer par ailleurs délicat compte tenu de l'exiguïté de l'environnement, et l'engin peut même être coincé dans une galerie, suite à un basculement de l'essieu sur lequel est monté le pneumatique crevé. Dans tous les cas, il en résulte une perte de productivité résultant de l'immobilisation de l'engin.

Il y a donc un intérêt important pour un exploitant de mine souterraine à pouvoir détecter visuellement en environnement obscur les zones agressées des faces latérales de pneumatique, en vue de prévoir les opérations de maintenance nécessaires.

Les inventeurs se sont donnés pour objectif de permettre la détection visuelle en environnement obscur des zones agressées des faces latérales d'un pneumatique équipant un véhicule lourd de génie civil utilisé dans un environnement mécanique agressif tel que celui des mines souterraines.

Cet objectif a été atteint par un procédé indicateur d'agressions d'un pneumatique pour un véhicule lourd de type génie civil, le pneumatique comprenant une bande de roulement, la bande de roulement comprenant une surface de roulement ayant deux extrémités axiales prolongées radialement vers l'intérieur par deux faces d'extrémité de bande de roulement, chaque face d'extrémité de bande de roulement étant prolongée radialement vers l'intérieur par une face externe de flanc, une face d'extrémité de bande de roulement et la face externe de flanc la prolongeant radialement vers l'intérieur constituant une face latérale de pneumatique, le procédé comprenant :
- une première étape d'application d'un matériau de revêtement rétro-réfléchissant sur au moins une partie d'au moins une face latérale de pneumatique, permettant une détection visuelle en environnement obscur de la partie d'au moins une face latérale de pneumatique,
- une deuxième étape d'utilisation du pneumatique dans un environnement mécaniquement agressif,
- une troisième étape d'identification en environnement obscur des zones agressées de la partie d'au moins une face latérale de pneumatique initialement revêtue par le matériau de revêtement rétro-réfléchissant et dépourvue dudit matériau de revêtement rétro-réfléchissant suite aux agressions mécaniques subies par le pneumatique en utilisation.

Un procédé indicateur d'agressions du pneumatique est un procédé permettant de déterminer visuellement en environnement obscur un niveau qualitatif et/ou quantitatif d'agressions du pneumatique. Par agression, on entend tout enlèvement accidentel de matériau élastomérique sur une face latérale du pneumatique, soit au niveau d'une face d'extrémité de la bande de roulement, soit au niveau d'une face externe de flanc. Une agression au sens de l'invention ne concerne pas la surface de roulement.

Le procédé indicateur d'agressions du pneumatique comprend une première étape d'application d'un matériau de revêtement rétro-réfléchissant sur au moins une partie d'au moins une face latérale de pneumatique, permettant une détection visuelle en environnement obscur de la partie d'au moins une face latérale de pneumatique.

Un matériau de revêtement rétro-réfléchissant est donc appliqué sur une face latérale de pneumatique. Le mode d'application dépend de la nature du matériau de revêtement rétro-réfléchissant. Il peut comprendre une étape de mise en place suivi d'une étape de fixation, par exemple par chauffage, du matériau de revêtement rétro-réfléchissant.

Le matériau de revêtement rétro-réfléchissant peut n'être appliqué que sur une seule face latérale du pneumatique, en particulier la face latérale extérieure du pneumatique qui est la seule visible lorsque le pneumatique est monté sur l'essieu d'un engin.

Le matériau de revêtement rétro-réfléchissant peut n'être appliqué que sur une partie de la face latérale du pneumatique concernée, en particulier celle qui est censée être soumise le plus aux agressions. Cette partie de face latérale de pneumatique peut être limitée à tout ou partie de la face d'extrémité de la bande de roulement et/ou tout ou partie de la face externe de flanc.

Le matériau de revêtement rétro-réfléchissant ainsi appliqué sur une face latérale de pneumatique permet de repérer le pneumatique individuellement, lorsqu'il est par exemple stocké dans un emplacement de stockage d'une mine souterraine. Il permet également de repérer l'engin sur lequel il est monté.

Le procédé indicateur d'agressions du pneumatique comprend une deuxième étape d'utilisation du pneumatique dans un environnement mécaniquement agressif.

Dans cette deuxième étape, le pneumatique, monté sur un essieu d'un engin, roule dans son environnement d'exploitation agressif mécaniquement d'une part du fait de la présence au sol de nombreux blocs de pierre plus ou moins anguleux, d'autre part du fait de l'agressivité des parois de galerie taillées dans la roche. Il en résulte que les parties de face latérale de pneumatique agressées, initialement revêtues par le matériau de revêtement rétro-réfléchissant, vont perdre ledit matériau de revêtement rétro-réfléchissant suite aux agressions mécaniques subies par le pneumatique en utilisation.

Le procédé indicateur d'agressions du pneumatique comprend une troisième étape d'identification en environnement obscur des zones agressées de la partie d'au moins une face latérale de pneumatique initialement revêtue par le matériau de revêtement rétro-réfléchissant et dépourvue dudit matériau de revêtement rétro-réfléchissant suite aux agressions mécaniques subies par le pneumatique en utilisation.

Dans cette troisième étape, les zones agressées de la face latérale de pneumatique, initialement revêtues par le matériau de revêtement rétro-réfléchissant, vont ainsi se distinguer des zones non agressées par la disparition du matériau de revêtement rétro-réfléchissant. Sur la face latérale de pneumatique, on peut alors observer des zones non agressées rétro-réfléchissantes et des zones agressées de couleur noire. La disparition locale du revêtement rétro-réfléchissant est un indicateur d'agression locale de la face latérale de pneumatique.

Un autre avantage de l'invention est que les pierres ou blocs de pierre à l'origine des agressions des faces latérales de pneumatique vont porter les traces du matériau de revêtement rétro-réfléchissant ainsi arraché. Ce qui va permettre de déterminer les endroits les plus agressifs pour le pneumatique le long du trajet suivi par l'engin.

Selon un premier mode de réalisation, la première étape est une étape d'application d'un matériau de revêtement rétro-réfléchissant sur au moins une partie d'au moins une face externe de flanc. En d'autres termes, la détection des zones agressées est limitée à une face externe de flanc.

Selon un deuxième mode de réalisation, la première étape est une étape d'application d'un matériau de revêtement rétro-réfléchissant sur au moins une partie d'au moins une face d'extrémité de bande de roulement. En d'autres termes, la détection des zones agressées est limitée à une face d'extrémité de bande de roulement.

Selon un mode de réalisation préféré, la première étape est une étape d'application d'un matériau de revêtement rétro-réfléchissant de type produit d'enduction. A titre d'exemple, un matériau de revêtement rétro-réfléchissant de type produit d'enduction peut être une peinture qui présente l'avantage d'être facilement appliquée sur une face latérale de pneumatique.

Encore plus préférentiellement, la première étape est une étape d'application d'un matériau de revêtement rétro-réfléchissant de type produit d'enduction comprenant des microbilles de verre. Ce type de matériau de revêtement rétro-réfléchissant présente l'avantage d'une part d'être performant en matière de rétroflexion, d'autre part d'être particulièrement adapté à une application sur un matériau élastomérique, tel que celui qui constitue la face latérale de pneumatique. Le procédé d'application d'un tel matériau de revêtement rétro-réfléchissant est bien connu de l'homme du métier. A titre d'exemple, le document US6623793 décrit un tel procédé d'application.

Selon une première variante, la troisième étape d'identification en environnement obscur des zones agressées de la partie d'au moins une face latérale de pneumatique comprend une étape de localisation des zones agressées de la partie d'au moins une face latérale de pneumatique. En d'autres termes, l'indicateur d'agressions est un indicateur purement qualitatif basé sur la seule localisation des zones agressées.

Selon une deuxième variante, la troisième étape d'identification en environnement obscur des zones agressées de la partie d'au moins une face latérale de pneumatique comprend une étape de mesure de la profondeur des zones agressées de la partie d'au moins une face latérale de pneumatique. A cet effet, la face latérale de pneumatique peut être pourvue de rainures circonférentielles deux à deux adjacentes de profondeurs différentes et recouvertes d'un matériau de revêtement rétro-réfléchissant. Dans ces conditions, l'identification des rainures encore recouvertes de matériau de revêtement rétro-réfléchissant, après agression, permet d'indiquer que la profondeur de l'agression est inférieure à celles des rainures encore intègres. C'est donc un indicateur quantitatif de la profondeur de l'agression.

Selon une troisième variante, la troisième étape d'identification en environnement obscur des zones agressées de la partie d'au moins une face latérale de pneumatique comprend une étape de mesure de l'étendue des zones agressées de la partie d'au moins une face latérale de pneumatique. Une mesure de l'étendue d'une zone agressée peut consister simplement en une estimation de sa surface géométrique. Dans ce cas, l'indicateur d'agressions peut être un indicateur quantitatif tel que, par exemple et de façon non exhaustive, un intervalle dans lequel sont comprises les surfaces géométriques des zones agressées, ou la surface géométrique totale agressée, somme des surfaces géométriques des zones agressées.

Enfin, selon une quatrième variante, la troisième étape d'identification en environnement obscur des zones agressées de la partie d'au moins une face latérale de pneumatique comprend une étape de comptage des zones agressées de la partie d'au moins une face latérale de pneumatique. Dans ce cas, l'indicateur d'agressions peut être un indicateur quantitatif tel que, par exemple et de façon non exhaustive, le nombre total de zones agressées sur la face latérale de pneumatique ou le nombre de zones agressées sur une partie de face latérale de pneumatique donnée.

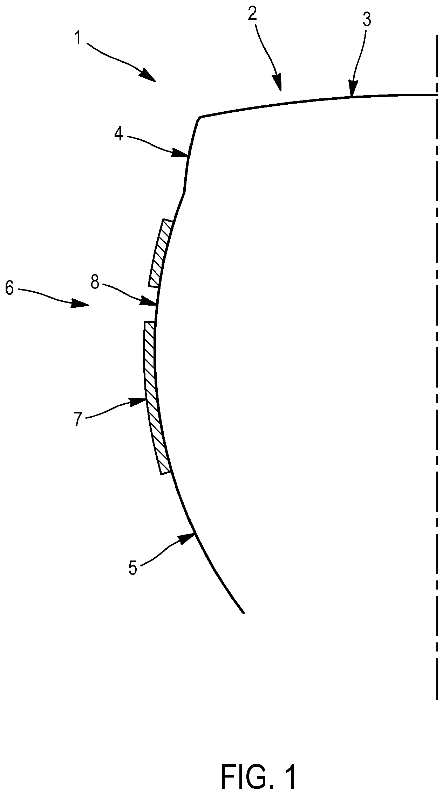

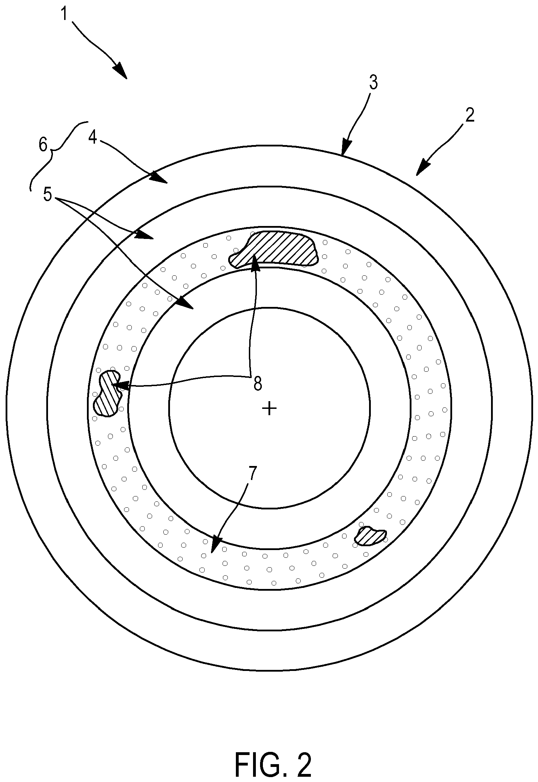

Les caractéristiques de l'invention seront mieux comprises à l'aide de la description des figures 1 et 2 annexées

Les figures 1 et 2 ne sont pas représentées à l'échelle pour en faciliter la compréhension.
La figure 1 représente une demi-coupe méridienne d'un pneumatique, c'est-à-dire selon un plan méridien contenant l'axe de rotation du pneumatique.
La figure 2 représente une vue de profil d'un pneumatique, selon l'invention.

Sur la figure 1, le pneumatique 1, dont seulement une demi-coupe méridienne est représentée, comprend une bande de roulement 2. La bande de roulement 2 comprend une surface de roulement 3 ayant une extrémité axiale prolongée radialement vers l'intérieur par une face d'extrémité de bande de roulement 4. La face d'extrémité de bande de roulement 4 est prolongée radialement vers l'intérieur par une face externe de flanc 5. La face d'extrémité de bande de roulement 4 et la face externe de flanc 5 la prolongeant radialement vers l'intérieur constituent une face latérale de pneumatique 6. Sur au moins une partie de la face latérale de pneumatique 6, et, dans le cas présent, sur une partie de la face externe de flanc 5, est appliqué un matériau de revêtement rétro-réfléchissant 7. L'épaisseur de matériau de revêtement rétro-réfléchissant 7 n'est pas représentée à l'échelle, pour faciliter la compréhension. Une discontinuité dans le matériau de revêtement rétro-réfléchissant 7 représente une zone agressée 8.

Sur la figure 2, le pneumatique 1, en vue de profil, comprend une bande de roulement 2 destinée à entrer en contact avec un sol par l'intermédiaire d'une surface de roulement 3. La face latérale de pneumatique 6, constituée par la face d'extrémité de bande de roulement 4 et la face externe de flanc 5, est recouverte sur une partie de la face externe de flanc 5 par un matériau de revêtement rétro-réfléchissant 7 en surépaisseur par rapport à la face externe de flanc 5. Sont également représentées, sous forme de discontinuités hachurées dans le matériau de revêtement rétro-réfléchissant 7, des zones agressées 8 dans la partie de la face externe de flanc 5 initialement recouverte par le matériau de revêtement rétro-réfléchissant 7.

L'invention a été plus particulièrement testée sur un pneumatique équipant un engin d'exploitation minière souterraine, avec application d'un matériau rétro-réfléchissant de type produit d'enduction comprenant des microbilles de verre. Les inventeurs ont pu observer les avantages attendus en termes d'indication d'agressions.

L'invention peut être étendue à tout type de matériau de revêtement rétro-réfléchissant compatible avec un matériau élastomérique.

Elle peut être également étendue à un procédé dans lequel l'étape d'application du matériau de revêtement rétro-réfléchissant est intégrée au procédé fabrication du pneumatique, c'est-à-dire est antérieure et non postérieure, comme dans la présente invention, à l'étape de cuisson du pneumatique.

## Revendications

1. Procédé indicateur d'agressions d'un pneumatique (1) pour un véhicule lourd de type génie civil, le pneumatique (1) comprenant une bande de roulement (2), la bande de roulement (2) comprenant une surface de roulement (3) ayant deux extrémités axiales prolongées radialement vers l'intérieur par deux faces d'extrémité de bande de roulement (4), chaque face d'extrémité de bande de roulement (4) étant prolongée radialement vers l'intérieur par une face externe de flanc (5), une face d'extrémité de bande de roulement (4) et la face externe de flanc (5) la prolongeant radialement vers l'intérieur constituant une face latérale de pneumatique (6), la face latérale de pneumatique (6) étant pourvue de rainures circonférentielles deux à deux adjacentes de profondeurs différentes , le procédé comprenant :
- une première étape d'application d'un matériau de revêtement rétro-réfléchissant (7) sur au moins une partie d'au moins une face latérale de pneumatique (6), de telle sorte que les rainures circonférentielles sont recouvertes par le matériau de revêtement rétro-réfléchissant, permettant une détection visuelle en environnement obscur de la partie d'au moins une face latérale de pneumatique (6),
- une deuxième étape d'utilisation du pneumatique (1) dans un environnement mécaniquement agressif,
- une troisième étape d'identification en environnement obscur des zones agressées (8) de la partie d'au moins une face latérale de pneumatique (6) initialement revêtue par le matériau de revêtement rétro-réfléchissant (7) et dépourvue dudit matériau de revêtement rétro-réfléchissant (7) suite aux agressions mécaniques subies par le pneumatique (1) en utilisation, la troisième étape comprenant une étape de localisation des zones agressées (8) et une étape de mesure de la profondeur des zones agressées (8) de la partie d'au moins une face latérale de pneumatique (6).

2. Procédé indicateur d'agressions d'un pneumatique (1) selon la revendication 1, dans lequel la première étape est une étape d'application d'un matériau de revêtement rétro-réfléchissant (7) sur au moins une partie d'au moins une face externe de flanc (5).

3. Procédé indicateur d'agressions d'un pneumatique (1) selon l'une quelconque des revendications 1 ou 2, dans lequel la première étape est une étape d'application d'un matériau de revêtement rétro-réfléchissant (7) sur au moins une partie d'au moins une face d'extrémité de bande de roulement (4).

4. Procédé indicateur d'agressions d'un pneumatique (1) selon l'une quelconque des revendications 1 à 3, dans lequel la première étape est une étape d'application d'un matériau de revêtement rétro-réfléchissant (7) de type produit d'enduction.

5. Procédé indicateur d'agressions d'un pneumatique (1) selon l'une quelconque des revendications 1 à 4, dans lequel la première étape est une étape d'application d'un matériau de revêtement rétro-réfléchissant (7) de type produit d'enduction comprenant des microbilles de verre.

6. Procédé indicateur d'agressions d'un pneumatique (1) selon l'une quelconque des revendications 1 à 5, dans lequel la troisième étape d'identification en environnement obscur des zones agressées (8) de la partie d'au moins une face latérale de pneumatique (6) comprend une étape de mesure de l'étendue des zones agressées (8) de la partie d'au moins une face latérale de pneumatique (6).

7. Procédé indicateur d'agressions d'un pneumatique (1) selon l'une quelconque des revendications 1 à 6, dans lequel la troisième étape d'identification en environnement obscur des zones agressées (8) de la partie d'au moins une face latérale de pneumatique (6) comprend une étape de comptage des zones agressées (8) de la partie d'au moins une face latérale de pneumatique (6).

## Patentansprüche

1. Verfahren zum Anzeigen von Angriffen auf einen Reifen (1) für ein ziviles Schwerlastfahrzeug, wobei der Reifen (1) einen Laufstreifen (2) umfasst, wobei der Laufstreifen (2) eine Lauffläche (3) umfasst, die zwei axiale Enden aufweist, die durch zwei Laufstreifen-Endseiten (4) radial nach innen verlängert sind, wobei jede Laufstreifen-Endseite (4) durch eine Seitenwandaußenseite (5) radial nach innen verlängert ist, wobei eine Laufstreifen-Endseite (4) und die Seitenwandaußenseite (5), die sie radial nach innen verlängert, eine Reifen-Seitenfläche (6) bilden, wobei die Reifen-Seitenfläche (6) mit paarweisen benachbarten Umfangsrillen unterschiedlicher Tiefen versehen ist, das Verfahren umfassend:
- einen ersten Schritt des Aufbringens eines retroreflektierenden Belagmaterials (7) auf zumindest einen Abschnitt mindestens einer Reifen-Seitenfläche (6), so dass die Umfangsrillen von dem retroreflektierenden Belagmaterial bedeckt sind, was eine visuelle Erkennung des Abschnitts mindestens einer Reifen-Seitenfläche (6) in dunkler Umgebung ermöglicht,
- einen zweiten Schritt des Nutzens des Reifens (1) in einer mechanisch aggressiven Umgebung,
- einen dritten Schritt des Feststellens in dunkler Umgebung der angegriffenen Bereiche (8) des Abschnitts mindestens einer Reifen-Seitenfläche (6), die anfangs durch das retroreflektierende Belagmaterial (7) bedeckt war und nach den mechanischen Angriffen, die der Reifen (1) bei der Nutzung erlitten hat, frei von dem retroreflektierenden Belagmaterial (7) ist, wobei der dritte Schritt einen Schritt der Lokalisierung der angegriffenen Bereiche (8) und einen Schritt des Messens der Tiefe der angegriffenen Bereiche (8) des Abschnitts mindestens einer Reifen-Seitenfläche (6) umfasst.

2. Verfahren zum Anzeigen von Angriffen auf einen Reifen (1) nach Anspruch 1, wobei der erste Schritt ein Schritt des Aufbringens eines retroreflektierenden Belagmaterials (7) auf zumindest einen Abschnitt mindestens einer Seitenwandaußenseite (5) ist.

3. Verfahren zum Anzeigen von Angriffen auf einen Reifen (1) nach einem der Ansprüche 1 oder 2, wobei der erste Schritt ein Schritt des Aufbringens eines retroreflektierenden Belagmaterials (7) auf zumindest einen Abschnitt mindestens einer Laufstreifen-Endseite (4) ist.

4. Verfahren zum Anzeigen von Angriffen auf einen Reifen (1) nach einem der Ansprüche 1 bis 3, wobei der erste Schritt ein Schritt des Aufbringens eines retroreflektierenden Belagmaterials (7) des Beschichtungsmitteltyps ist.

5. Verfahren zum Anzeigen von Angriffen auf einen Reifen (1) nach einem der Ansprüche 1 bis 4, wobei der erste Schritt ein Schritt des Aufbringens eines retroreflektierenden Belagmaterials (7) des Beschichtungsmitteltyps mit Mikroglaskugeln ist.

6. Verfahren zum Anzeigen von Angriffen auf einen Reifen (1) nach einem der Ansprüche 1 bis 5, wobei der dritte Schritt des Feststellens der angegriffenen Bereiche (8) des Abschnitts mindestens einer Reifen-Seitenfläche (6) in dunkler Umgebung einen Schritt des Messens der Ausdehnung der angegriffenen Bereiche (8) des Abschnitts mindestens einer Reifen-Seitenfläche (6) umfasst.

7. Verfahren zum Anzeigen von Angriffen auf einen Reifen (1) nach einem der Ansprüche 1 bis 6, wobei der dritte Schritt des Feststellens der angegriffenen Bereiche (8) des Abschnitts mindestens einer Reifen-Seitenfläche (6) in dunkler Umgebung einen Schritt des Zählens der angegriffenen Bereiche (8) des Abschnitts mindestens einer Reifen-Seitenfläche (6) umfasst.

## Claims

1. Method for indicating attacks on a tyre (1) for a heavy vehicle of the civil engineering type, the tyre (1) comprising a tread (2), the tread (2) comprising a tread surface (3) having two axial ends extended radially inwards by two tread end faces (4), each tread end face (4) being extended radially inwards by a sidewall external face (5), a tread end face (4) and the sidewall external face (5) extending it radially inwards constituting a tyre lateral face (6), the tyre lateral face (6) being provided with circumferential grooves adjacent two by two and of different depths, the method comprising:
- a first step of applying a retroreflective covering material (7) to at least part of at least one tyre lateral face (6), such that the circumferential grooves are covered with the retroreflective covering material, allowing visual detection in an environment of darkness of that part of at least one tyre lateral face (6),
- a second step of using the tyre (1) in a mechanically aggressive environment,
- a third step of identifying, in an environment of darkness, the attacked zones (8) of the part of at least one tyre lateral face (6) initially covered with the retroreflective covering material (7) and now devoid of the said retroreflective covering material (7) as a result of the mechanical attack experienced by the tyre (1) in use, the third step comprising a step of locating the attacked zones (8) and a step of measuring the depth of the attacked zones (8) of the part of at least one tyre lateral face (6).

2. Method for indicating attacks on a tyre (1) according to Claim 1, in which the first step is a step of applying a retroreflective covering material (7) to at least part of at least one sidewall external face (5).

3. Method for indicating attacks on a tyre (1) according to either one of Claims 1 and 2, in which the first step is a step of applying a retroreflective covering material (7) to at least part of at least one tread end face (4).

4. Method for indicating attacks on a tyre (1) according to any one of Claims 1 to 3, in which the first step is a step of applying a retroreflective covering material (7) of coating product type.

5. Method for indicating attacks on a tyre (1) according to any one of Claims 1 to 4, in which the first step is a step of applying a retroreflective covering material (7) of the coating product type containing glass microbeads.

6. Method for indicating attacks on a tyre (1) according to any one of Claims 1 to 5, in which the third step of identifying, in an environment of darkness, the attacked zones (8) of the part of at least one tyre lateral face (6) comprises a step of measuring the spread of the attacked zones (8) of the part of at least one tyre lateral face (6).

7. Method for indicating attacks on a tyre (1) according to any one of Claims 1 to 6, in which the third step of identifying, in an environment of darkness, the attacked zones (8) of the part of at least one tyre lateral face (6) comprises a step of counting the attacked zones (8) of the part of at least one tyre lateral face (6).
